# EUROPEAN PATENT SPECIFICATION

(11) **EP 1 251 451 B1**
(45) Date of publication and mention of the grant of the patent: **07.05.2008**
(21) Application number: 02290863.6
(22) Date of filing: 05.04.2002
(51) Int. Cl.: G06K 7/00

(54) **System with IC card deactivation before a hardware reset**
System mit Deaktivierung der IC Karte vor einem Reset der Hardware
Système avec désactivation de la carte à puce avant une remise à zéro des ressources matérielles

(30) Priority: 17.04.2001 EP 01400986
(43) Date of publication of application: 23.10.2002
(73) Proprietor: Thomson Licensing, 92100 Boulogne-Billancourt (FR)
(72) Inventor: Fouque, Claude, 22640 La Malhoure (FR); Rambault, Claude, 35250 Saint Sulpice la Forêt (FR); Matei, Gabriel, 35200 Rennes (FR); Bertin, Jean-Pierre, 44290 Guemene-Penfao (FR)
(74) Representative: Arnold, Klaus-Peter

(56) References cited:
- EP-A- 0 814 427
- WO-A-97/25685

## Description

The invention relates to a device comprising a microcontroller and an interface controller for communicating with an IC card as a portable data medium. Devices of this kind are used for example for Pay TV, electronic payment, or banking services.

For these applications compact portable data media are used, having the size of about a credit card, and which comprise an integrated card-controller, or at least an integrated memory, for data exchange with a respective device. Data media of this kind are known for example as smart card, IC card or identification card, and described for example in EP-A-0 633 544. As a general term for these data media, the expression "IC card" will be used in this description.

A device as described above is known for example from WO 98/00772 and WO 97/25685. A standard with a specification for a special type of IC cards is defined in ISO/IEC 7816-3:1997(E). In this standard the design and the operation procedures for integrated circuit cards with contacts (identification cards) are described.

As an interface controller for providing the data exchange between the microcontroller of a respective device and an IC card, integrated circuits are known, for example TDA 8004T from Philips Semiconductors, which are coupled between the microcontroller and the IC card. The interface controller provides also the voltage supply and the control functions with automatic activation and deactivation sequences for the IC card.

The object of the invention is to provide a device for a communication with an IC card as described above, which gives a user an improved safety of operation.

This object is achieved for a device by means of the invention as specified in claim 1. Advantageous developments of the invention are specified in the dependent claims.

The invention relates to the problem that during the operation of a device with an IC card, the microcontroller of this device may run into an indefinite operating state, in which the device is no more working properly. According to the invention, the device comprises therefore a reset button for resetting the microcontroller, which is accessible to the customer, and a signal from the reset button simulates an extraction of the IC card, which provides a deactivation of the IC card. As an alternative, it may simulate an IC card supply voltage shut-down. The simulation of the IC card extraction is realised for example using a logical OR-combination, which inputs are coupled to the reset button and to a card presence contact, and which output is coupled to a card presence input of the interface controller.

In a further aspect of the invention, a delay is provided for the pulse resetting the microcontroller, for delaying this pulse with respect to the pulse resetting the interface controller. This aspect relates especially to a device, in which the clock of the interface controller is coupled to and depending on the clock of the microcontroller. When in this device the microcontroller is reset, the clock signal stops and therefore also the interface controller. Then a controlled shut-down of the IC card is no more possible. When the reset pulse for the microcontroller is delayed with respect to the pulse resetting the interface-controller, the interface controller provides the respective deactivation sequences for the IC card, before the clock signal from the microcontroller stops.

Usually the IC cards are contacted by use of metal contacts, but wireless applications are also within the invention.

Preferred embodiments of the invention are now explained in more detail with reference to schematic drawings, which show:
- Fig. 1: a system comprising a microcontroller, an interface controller and an IC card (prior art), and
- Fig. 2: the system of Fig. 1, comprising in addition a reset circuit with a delay for the microcontroller.

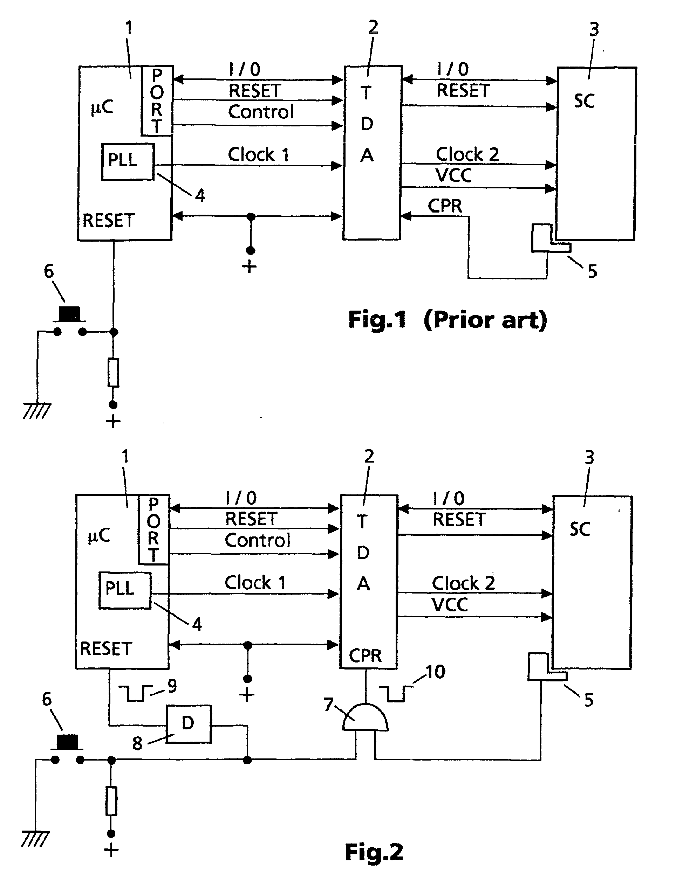

The system as shown in Fig. 1 comprises a microcontroller 1 and an interface controller 2 for communicating with a portable data medium, especially an IC card 3, as defined in the preamble of the description. The microcontroller 1 and the interface controller 2 are arranged within a device, for example a satellite receiver or a settop box. The respective IC card 3 provides in this embodiment special television services, depending on the country, in which the device is used, and depending on the options of a user, with regard to Pay-TV. With the IC card 3 the user informs the microcontroller 1 about the respective authorisation.

As the interface controller 2 an integrated circuit is used, for example TDA 8004T of Philips Semiconductors, which complies with the ISO 7816-3 standard. This interface controller IC provides the data exchange and automatic activation and deactivation sequences for the IC card 3, also the necessary supply voltages as well as protection functions for the card contacts.

The interface controller 2 is controlled by the microcontroller 1 via a port, which is coupled to the interface controller 2, and which provides control and reset functions RESET, Control, as well as data input/output connections I/O. In this embodiment, the clock for the interface controller 2 is also provided by the microcontroller 1, signal CLOCK1 from a PLL circuit 4 within the microcontroller 1. The clock signal CLOCK2 from the interface controller 2 to the IC card 3 may have the same frequency as the CLOCK1 signal, or may differ in frequency.

When the IC Card 3 is inserted into the device, a card presence contact 5 is switched, which informs the interface controller 2 via a signal CPR, that an IC card 3 is inserted. Then the IC card 3 is activated by the interface controller 2 by providing a supply voltage VCC and a clock signal CLOCK2, and started with a reset via line RESET for performing data exchange via the I/O data lines. The detailed activation and operation for the IC card 3 is described in the specification of the TDA 8004T as well as in ISO/IEC 7816-3, to which is referred herewith.

During the operation of the device, the microcontroller 1 may run into an indefinite operating state, in which the device is no more working properly. A user may suspect then a serious malfunction and will be irritated, and may switch the device then off and on again. The device comprises therefore a reset button 6, accessible to the user, which is coupled to a reset input RESET of the microcontroller 1, for resetting the microcontroller 1 and returning herewith to normal operation of the device.

In Fig. 2 a system comprising a microcontroller 1, an interface controller 2 and an IC card 3 as described according to Fig. 1 is shown. In addition, the system comprises a reset circuit, via which the signal from the reset button 6 is applied both to the microcontroller 1 and to the interface controller 2. The reset signal from the button 6 is advantageously coupled via a logical OR-combination 7 with the line from the card presence contact 5 and then applied to the input CPR of the interface controller 2. When the button 6 is pushed by a user, the interface controller 2 assumes a removal of the IC card 3, and provides then immediately the deactivation of the IC card 3.

Between the button 6 and the reset input RESET of the microcontroller 1 a delay 8 is provided, via which the signal 9 resetting the microcontroller 1 is delayed with respect to the signal 10 resetting the interface controller 2. This is especially advantageous, when the clock for the interface controller 2, CLOCK1, is provided by the microcontroller 1. When the microcontroller 1 is reset in this case, the CLOCK1 signal stops, and therefore also the interface controller 2. With the delay circuit 8, having a delay for example of about 0.5 msec, sufficient time is provided for the interface controller 2 for deactivating the IC card 3.

In this embodiment, a reset for the microcontroller 1 as well as for the interface controller 2 is caused by a logical "0". In normal operation of the device, the signals from the reset button 6 and the card presence contact 5 are therefore "1". To provide a logical OR-combination, an AND-circuit 7 is used for combining the signals from the reset button 6 and the card presence contact 5. This results in a logical "0" for the interface controller 2, when either a logical "0" is provided by the reset button 6 or by the card presence contact 5.

The reset button 6 may be coupled also with a supply line providing the voltage VCC to the IC card 3, in which case a signal from the reset button 6 simulates a card supply voltage shut-down. The interface controller 2 may be provided also with its own circuitry for generating the clock signal, which makes the interface controller 2 independent from the signal CLOCK1. For this embodiment the delay 8 is not necessary, because then in case of a reset the interface controller 2 can deactivate the IC card 3 independent from the microcontroller 1.

The systems as described with regard to Fig. 1 and Fig. 2 comply with the specification according to ISO/IEC 7816-3, but other applications lie also within the range of the invention.

To the logical OR-combination 7 in addition also a reset signal from a watchdog circuit may be coupled. The watchdog circuit, known also as watchdog timer, is monitoring the proper operation of the microcontroller and provides a timing function in that it is waiting a certain time period for a reset signal from the microcontroller, which the microcontroller provides periodically during normal operation. In case of an software error, for example when the microprocessor is hanging in a loop, the reset signal for the watchdog circuit is no more generated, and then the watchdog circuit provides a reset for the microcontroller. As a result, the microcontroller provides a restart for returning to the normal mode of operation. The watchdog circuit may included for example within the microcontroller 1.

The reset signal from the watchdog circuit is applied advantageously to a second logical OR-combination to combine this signal with a reset signal from the reset button 6, and the output of this OR-combination is coupled both to the delay 8 input and to an input of the first logical OR-combination 7.

## Claims

1. Device comprising
a microcontroller (1) for signal processing,
an interface controller (2) for communicating with an IC card (3) and for providing a card supply voltage (VCC), when said IC card is inserted, said interface controller (2) being coupled between said microcontroller (1) and said IC card (3),
a reset button (6) for resetting the microcontroller (1) by means of a first reset signal (9), said reset button (6) being accessible to a user, and
a card presence contact (5) coupled to a card presence input of the interface controller (2), **characterized in that**
a second reset signal (10) generated by the reset button (6) is coupled to said card presence input, whereby when the reset button is pushed by a user, the second reset signal (10) simulates that the IC card (3) has been removed, wherein the interface controller (2), when informed by the card presence input that the IC card (3) has been removed, either deactivates the IC card (3) or shuts down the card supply voltage (VCC).

2. Device according to claim 1, **characterized in that** the first reset signal (9) from the reset button (6) resetting the microcontroller (1) is delayed with respect to the second reset signal (10), which resets the interface controller (2).

3. Device according to claim 1 or 2, **characterized in that** the second reset signal (10) from the reset button (6) is combined with the card presence signal from the card presence contact (5) via a logical OR-combination (7), and then coupled to the interface controller (2).

4. Device according to one of the claims 1 - 3, **characterized in that** the device is a settop box or a satellite receiver with an IC card operation for Pay TV or electronic payment.

## Patentansprüche

1. Vorrichtung, umfassend
ein Mikrosteuergerät (1) zur Signalverarbeitung,
ein Schnittstellensteuergerät (2) zum Kommunizieren mit einer IC-Karte (3) und zum Bereitstellen einer Kartenversorgungsspannung (VCC), wenn die IC-Karte eingesteckt ist, wobei das Schnittstellensteuergerät (2) zwischen dem Mikxosteuergerät (1) und der IC-Karte (3) gekoppelt ist,
eine Rückstelltaste (6) zum Zurückstellen des Mikrosteuergerätes (1) mittels eines ersten Rückstellsignals (9), wobei die Rückstelltaste (6) für einen Benutzer zugänglich ist, und
einen Kartenanwesenheitskontakt (5), der mit einem Kartenanwesenheitseingang des Schnittstellensteuergerätes (2) gekoppelt ist, **dadurch gekennzeichnet, dass**
ein zweites Rückstellsignal (10), das durch die Rückstelltaste (6) erzeugt wird, mit dem Kartenanwesenheitseingang gekoppelt ist, wodurch, wenn die Rückstelltaste von einem Benutzer gedrückt wird, das zweite Rückstellsignal (10) simuliert, dass die IC-Karte (3) entfernt worden ist, wobei das Schnittstellensteuergerät (2), wenn es durch den Kartenanwesenheitseingang informiert wird, dass die IC-Karte (3) entfernt worden ist, entweder die IC-Karte (3) deaktiviert oder die Kartenversorgungsspannung (VCC) abschaltet.

2. Vorrichtung nach Anspruch 1, **dadurch gekennzeichnet, dass** das erste Rückstellsignal (9) von der Rückstelltaste (6), welches das Mikrosteuergerät (1) zurückstellt, im Verhältnis zu dem zweiten Rückstellsignal (10) verzögert ist, welches das Schnittstellensteuergerät (2) zurückstellt.

3. Vorrichtung nach Anspruch 1 oder 2, **dadurch gekennzeichnet, dass** das zweite Rückstellsignal (10) von der Rückstelltaste (6) mit dem Kartenanwesenheitssignal von dem Kartenanwesenheitskontakt (5) über eine logische ODER-Verknüpfung (7) verknüpft wird, und dann mit dem Schnittstellensteuergerät (2) gekoppelt wird.

4. Vorrichtung nach einem der Ansprüche 1 bis 3, **dadurch gekennzeichnet, dass** die Vorrichtung aus einem Zusatzempfangsgerät oder einem Satellitenempfangsgerät mit einem IC-Kartenbetrieb für Bezahlfernsehen oder elektronische Zahlung besteht.

## Revendications

1. Dispositif comprenant
un micro-contrôleur (1) pour un traitement de signal,
un contrôleur (2) d'interface pour communiquer avec une carte à puce (3) et pour fournir une tension d'alimentation de carte (VCC) lorsque ladite carte à puce est insérée, ledit contrôleur (2) d'interface étant couplé entre ledit micro-contrôleur (1) et ladite carte à puce (3),
un bouton de remise à zéro (6) pour remettre à zéro le micro-contrôleur (1) à l'aide d'un premier signal (9) de remise à zéro, ledit bouton (6) de remise à zéro étant accessible à un utilisateur, et
un contact (5) de présence de carte couplé à une entrée de présence de carte du contrôleur (2)d'interface, **caractérisé en ce que**
un second signal (10) de remise à zéro généré par le bouton (6)de remise à zéro est couplé à ladite entrée de présence de carte, par laquelle lorsque le bouton de remise à zéro est enclenché par un utilisateur, le second signal (10) de remise à zéro simule que la carte à puce (3) a été enlevée, où le contrôleur (2) d'interface, lorsqu'il est informé par l'entrée de présence de carte que la carte à puce (3) a été enlevée, soit désactive la carte à puce (3), soit coupe la tension d'alimentation de la carte (VCC).

2. Dispositif selon la revendication 1, **caractérisé en ce que** le premier signal (9) de remise à zéro provenant du bouton (6) de remise à zéro remettant à zéro le micro-contrôleur (1) est retardé par rapport au second signal (10) de remise à zéro qui remet à zéro le contrôleur (2) d'interface.

3. Dispositif selon la revendication 1 ou 2, **caractérisé en ce que** le second signal (10) de remise à zéro provenant du bouton (6) de remise à zéro est combiné au signal de présence de carte provenant du contact (5) de présence de carte via une combinaison OU logique (7), et est ensuite couplé au contrôleur (2) d'interface.

4. Dispositif selon une des revendications 1 à 3, **caractérisé en ce que** le dispositif est un boîtier décodeur ou un récepteur satellite avec une opération par carte à puce pour la télévision payante ou le télépaiement.
